# FASCICULE DE BREVET EUROPEEN

(11) **EP 2 714 609 B1**
(45) Date de publication et mention de la délivrance du brevet: **10.01.2018**
(21) Numéro de dépôt: 12731054.8
(22) Date de dépôt: 24.05.2012
(51) Int. Cl.: C03C 17/34

(54) **COUCHE BARRIERE AUX ALCALINS**
ALKALISPERRSCHICHT
ALKALI-BARRIER LAYER

(30) Priorité: 30.05.2011 FR 1154698
(43) Date de publication de la demande: 09.04.2014
(73) Titulaire: Saint-Gobain Glass France, 92400 Courbevoie (FR)
(72) Inventeur: CLABAU, Frédéric, 75013 Paris (FR)
(74) Mandataire: Saint-Gobain Recherche
(86) Numéro de dépôt international: PCT/FR2012/051166
(87) Numéro de publication internationale: WO 2012/164206

(56) Documents cités:
- WO-A1-2011/101444
- US-A1- 2002 172 775
- US-A1- 2003 165 693
- US-A1- 2008 241 523
- US-A1- 2010 326 817
- US-A1- 2011 203 578

## Description

L'invention se rapporte à un vitrage incorporant un substrat verrier comprenant sur au moins une partie de sa surface un empilement de couches dont une couche barrière à la migration des ions alcalins contenus dans ledit substrat, du type sodium Na⁺, potassium K⁺ etc. Ladite couche est contigüe ou placée à proximité immédiate du substrat verrier et protège une couche supérieure.

Un tel vitrage comprend ainsi notamment une ou plusieurs couches fonctionnelles du type antisolaire, bas émissif (low-e), antireflet, photocatalytique (vitrage autonettoyant) ou hydrophobe, c'est-à-dire une couche ou une succession de couches qui confère(nt) au vitrage en question une propriété particulière. Il trouve ainsi également son application dans les dispositifs utilisées pour le recouvrement de l'énergie lumineuse solaire et comprenant par exemple une couche du type TCO (transparent conductive oxide), notamment dans le domaine des cellules photovoltaïques ou des collecteurs solaires.

Dans le domaine des vitrages munis de couche ou d'un empilement de couches présentant les fonctionnalités précédemment exposés, il est connu depuis longtemps d'ajouter entre la surface du substrat verrier et la ou les couches fonctionnelles, c'est-à-dire celle(s) conférant plus particulièrement la propriété recherchée du vitrage en question, au moins une couche dite « barrière » aux alcalins. Cette couche permet de façon connue de limiter la diffusion des cations, notamment du type alcalins, présents initialement dans le substrat verrier et qui migrent vers les couches supérieures (et notamment vers la ou les couches fonctionnelles) dans la durée ou lors de phase de chauffe du vitrage. La migration de tels cations est bien connue comme une cause majeure de dégradation et d'altération des propriétés de telles couches fonctionnelles.

Pour éviter la migration de tels ions, des couches d'oxyde de Silicium, de nitrure de Silicium ou encore d'oxynitrure de Silicium sont parmi les plus utilisées car efficaces et peu chères à mettre en oeuvre. On pourra par exemple se référer à la demande US 2009/0084438, qui décrit une couche constituée par un oxyde, un nitrure ou un oxynitrure de Silicium (voir notamment paragraphe 0048), dans le but d'éviter la migration des alcalins depuis un substrat verrier vers les couches supérieures actives du type TCO ou argent.

La demande de brevet US2010326817 décrit une couche barrière en oxyde de silicium et d'aluminium dans laquelle le ratio atomique Si/Al est d'environ 85/15. La demande de brevet US2003165693 décrit une couche barrière de même nature. La demande de brevet US2008241523 décrit une couche à tenure en silicium et comprenant jusqu'à 8% d'aluminium.

Cependant, dans la plupart des cas, un effet barrière efficace sur la durée, notamment si le vitrage est soumis à un chauffage intense (trempe, bombage etc.) ou à une exposition en zone humide, ne peut être obtenu que si une épaisseur conséquente de tels matériaux est déposée entre le substrat et la ou les couches supérieures à protéger. Par exemple, on a pu mesurer qu'il est nécessaire de déposer, par les techniques habituelles de pulvérisation cathodique, des couches barrière de SiO₂ d'une épaisseur physique d'environ 50 nm pour être certain de garder les propriétés photocatalytiques d'une couche externe de TiO₂ dans l'empilement, après avoir soumis le vitrage fonctionnel à un recuit de l'ordre de 620°C pendant 10 minutes. En tenant compte de la vitesse relativement faible de dépôt de telles couches d'oxydes, nitrure ou oxynitrure de Silicium, il s'avère donc particulièrement intéressant de disposer de couches présentant un effet barrière exacerbé et qui pourront donc être déposées avec une moins grande épaisseur.

L'objet de la présente invention est de proposer un tel vitrage, muni d'une couche barrière présentant de telles propriétés. Plus précisément, la présente invention se rapporte à un vitrage incorporant un substrat verrier comprenant sur au moins une partie de sa surface un empilement de couches dont une couche barrière à la migration des ions contenus dans ledit substrat, notamment du type alcalins Na⁺ ou K⁺, ladite couche barrière étant interposée dans ledit empilement entre la surface dudit substrat et au moins une couche supérieure conférant audit vitrage une fonctionnalité du type antisolaire, bas émissif, antireflet, photocatalytique,
hydrophobe ou autre, ladite couche barrière étant constituée principalement par un oxynitrure de Silicium, ledit vitrage étant caractérisé en ce que ledit oxynitrure de Silicium comprend en outre un ou plusieurs éléments choisis dans le groupe constitué par Al, Ga ou B et en ce que le rapport atomique Si/X est strictement inférieur à 92/8, X étant la somme des contributions atomiques desdits éléments Al, Ga et B.

Selon des modes de réalisations préférés de la présente invention, qui peuvent le cas échéant bien évidemment être combinés entre eux :
- le rapport atomique Si/X est inférieur à 92/8 et supérieur à 70/30 de préférence supérieur à 80/20,
- le rapport atomique Si/X est inférieur à 90/10, de préférence inférieur à 88/12,
- l'élément X est l'Aluminium,
- l'élément X est le Gallium,
- l'élément X est le Bore,
- la couche barrière comprend au moins deux éléments choisis parmi le Bore, le Gallium et l'Aluminium,
- la couche barrière est un oxynitrure de Silicium dans lequel le rapport atomique N/O est supérieur à 10/90, de préférence supérieur à 20/80.

L'invention se rapporte également à un vitrage muni en outre d'une deuxième couche identique à la première couche barrière telle que précédemment décrite, mais disposée au dessus de ladite couche fonctionnelle.

Selon des modes possibles de mise en ouvre de ladite deuxième couche :
- elle est constituée essentiellement d'un oxyde de Silicium ou d'un oxynitrure de Silicium, comprenant un ou plusieurs éléments choisis dans le groupe constitué par Al, Ga ou B et dont le rapport atomique Si/X est strictement inférieur à 92/8,
- son rapport atomique Si/X de ladite deuxième couche est inférieur à 90/10, de préférence inférieur à 88/12,
- son rapport atomique Si/X est inférieur à 90/10, de préférence supérieur à 88/12,
- son rapport atomique Si/X est supérieure à 80/20,
- l'élément X est l'Aluminium,
- l'élément X est le Gallium,
- l'élément X est le Bore,
- la deuxième couche comprend au moins deux éléments choisis parmi le Bore, le Gallium et l'Aluminium,
- la deuxième couche est un oxyde de Silicium,
- la deuxième couche est un oxynitrure de Silicium, par exemple dans lequel le rapport atomique N/O est supérieur à 10/90, de préférence supérieur à 20/80.

### Exemples (hors invention):

Différentes couches barrières, constituées d'un oxyde de silicium dont éventuellement une partie des atomes de silicium sont substitués par Al ou B, ont été déposées sur des substrats en verre sodo-calcique d'une épaisseur de 2 mm, commercialisés sous la référence PLANILUX® par la société déposante. De manière conventionnelle, les couches barrières sont obtenues dans des enceintes de pulvérisation cathodique assistée par champ magnétique (magnétron).

Deux cibles dont une en SiO₂ et l'autre en Al₂O₃ ou B₂O₃ sont utilisées comme cathodes et co-pulvérisés par un plasma de gaz argon dans l'enceinte. Avant les dépôts, un vide est effectué dans l'enceinte jusqu'à atteindre une valeur résiduelle de 0,5 millipascals (mPa), selon les techniques bien connues dans le domaine.

Les débits et pressions des gaz servant à la pulvérisation des cibles, ainsi que la puissance appliquée sur chacune des cibles, sont donnés dans le tableau 1 suivant :

**Tableau 1**

| | Pression totale (mtorr) | Débit Ar (sccm) | Cible | Puissance (W) |
|---|---|---|---|---|
| SiAlO | 3 | 40 | SiO₂ | 500 |
| | | | Al₂O₃ | 80 |
| SiBO | 3 | 40 | SiO₂ | 500 |
| | | | B₂O₃ | 80 |

SiAlO désigne une couche barrière d'un oxyde de Silicium et d'Aluminium, SiBO désigne une couche barrière d'un oxyde de Silicium et de Bore. SiXO désigne une couche barrière d'un oxyde de Silicium et d'un élément X, X étant l'Aluminium ou le Bore.

Le rapport Si/X varie sur la longueur du substrat du fait de la variation entre chaque point de la surface de ce substrat et chacune des deux cibles (une en SiO₂ et l'autre en Al₂O₃ ou B₂O₃).

Le temps de dépôt est ajusté pour recueillir une épaisseur de couche d'environ 100 nanomètres.

Sur cette première couche barrière, on dépose selon les techniques conventionnelles dans une enceinte de pulvérisation cathodique assistée par champ magnétique (magnétron) une couche fonctionnelle d'oxyde transparent conducteur (TCO) du type AZO, constituée de ZnO dopé à l'aluminium (2 pourcents poids d'oxyde d'aluminium). L'épaisseur de cette couche fonctionnelle est d'environ 200 nm.

Le tableau 2 ci-dessous résume les différents exemples réalisés :

**Tableau 2**

| Exemple | Empilement | X | Si/X (atomique) | Si/X (massique) |
|---|---|---|---|---|
| 1 | Verre/SiXO/AZO | - | - | - |
| 2 | Verre/AZO/SiXO | Al | 96/4 | 96/4 |
| 3 | Verre/AZO/SiXO | Al | 82/18 | 82/18 |
| 4 | Verre/AZO/SiXO | B | 95,5/4,5 | 98,5/1,5 |
| 5 | Verre/AZO/SiXO | B | 87/13 | 95,5/4,5 |

Les substrats ainsi revêtus des empilements constitués par la couche barrière et la couche TCO sont ensuite soumis à un traitement thermique consistant en un chauffage à 600°C pendant 1 heure, afin d'étalonner les performances des différentes couches barrières synthétisées.

Pour tous les exemples, on a mesuré par les méthodes classiques de Spectrométrie de Masse d'Ions Secondaires (SIMS) les profils de concentration en ions Sodium dans les différents échantillons, depuis la surface jusqu'au substrat verrier selon la séquence surface/AZO (200mm)/SiXO (100 nm)/verre.

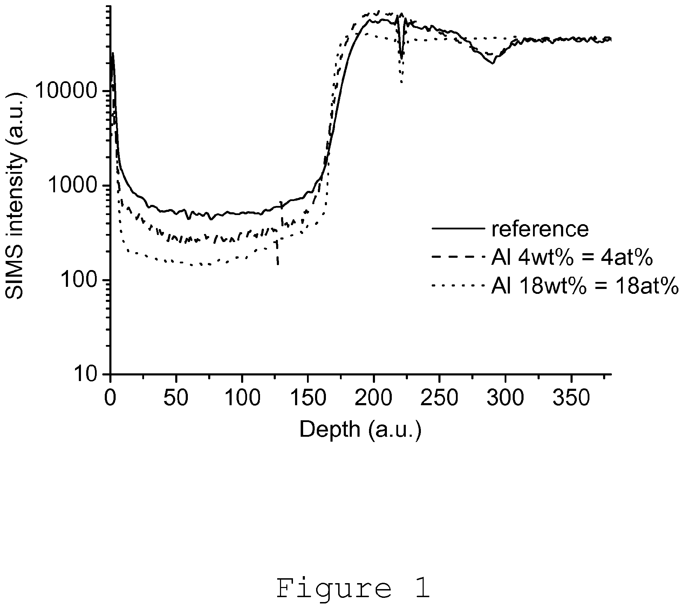

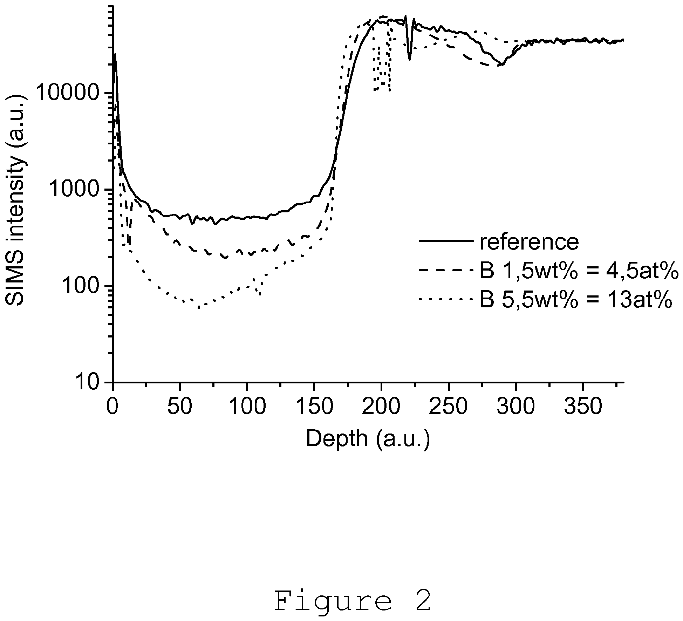

Les résultats obtenus pour les différents échantillons sont illustrés par les figures 1 (X=Al) et 2 (X=B) ci-jointes.

Sur ces figures, on peut voir que la couche d'AZO disposée en surface de l'empilement est beaucoup mieux protégée des alcalins dans le cas où la couche barrière d'oxyde de Silicium comprend une forte quantité d'Aluminium ou de Bore selon l'invention, en particulier des teneurs atomiques en Aluminium ou en Bore de plus de 8%, 9% ou même 10%, rapportées à la somme des atomes de silicium présents dans lesdites couches barrières. En particulier, on peut estimer au vu des courbes obtenues à partir des présents exemples et par rapport aux couches barrières en SiO₂ actuellement utilisées, que la concentration de Sodium dans la couche fonctionnelle AZO peut être divisée par un facteur 10 grâce à la mise en oeuvre d'une couche de protection selon l'invention.

Des essais supplémentaires identiques mais effectués avec des couches barrières constituées d'oxynitrure de silicium selon l'invention (avec un rapport atomique N/O proche de 1) dopé de la même manière, ont donnés des résultats sensiblement identiques.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Vitrage incorporant un substrat verrier comprenant sur au moins une partie de sa surface un empilement de couches dont une couche barrière à la migration des ions contenus dans ledit substrat, notamment du type alcalins Na⁺ ou K⁺, ladite couche barrière étant interposée dans ledit empilement entre la surface dudit substrat et au moins une couche supérieure conférant audit vitrage une fonctionnalité du type antisolaire, bas émissif, antireflet, photocatalytique, hydrophobe ou autre, ladite couche barrière étant constituée essentiellement d'un oxynitrure de Silicium, ledit vitrage étant **caractérisé en ce que** ledit oxynitrure de Silicium comprend en outre un ou plusieurs éléments choisis dans le groupe constitué par Al, Ga ou B et **en ce que** le rapport atomique Si/X est strictement inférieur à 92/8 dans ladite couche barrière, X étant la somme des contributions atomiques desdits éléments Al, Ga et B.

2. Vitrage selon la revendication 1, dans lequel le rapport atomique Si/X est inférieur à 92/8 et supérieur à 80/20.

3. Vitrage selon l'une des revendications 1 ou 2, dans lequel le rapport atomique Si/X est inférieur à 90/10, de préférence inférieur à 88/12.

4. Vitrage selon l'une des revendications précédentes, dans lequel l'élément X est l'Aluminium.

5. Vitrage selon l'une des revendications 1 à 3, dans lequel l'élément X est le Gallium.

6. Vitrage selon l'une des revendications 1 à 3, dans lequel l'élément X est le Bore.

7. Vitrage selon l'une des revendications 1 à 3, comprenant au moins deux éléments choisis parmi le Bore, le Gallium et l'Aluminium.

8. Vitrage selon la revendication précédente, dans lequel la couche barrière est un oxynitrure de Silicium dans lequel le rapport atomique N/O est supérieur à 10/90, de préférence supérieur à 20/80.

9. Vitrage selon l'une des revendications précédentes, comprenant en outre une surcouche disposée au dessus de ladite couche fonctionnelle, constituée essentiellement d'un oxyde de Silicium ou d'un oxynitrure de Silicium, comprenant un ou plusieurs éléments choisis dans le groupe constitué par Al, Ga ou B et dont le rapport atomique Si/X est strictement inférieur à 92/8.

10. Vitrage selon la revendication 9, dans lequel le rapport atomique Si/X est inférieur à 90/10, de préférence inférieur à 88/12.

11. Vitrage selon l'une des revendications 9 ou 10, dans lequel la surcouche est un oxyde de silicium.

12. Vitrage selon l'une des revendications 9 ou 10, dans lequel la surcouche est un oxynitrure de silicium.

## Patentansprüche

1. Verglasung, ein Glassubstrat einschließend, umfassend auf mindestens einem Teil seiner Oberfläche einen Stapel von Schichten, davon eine Sperrschicht für die Migration der in dem Substrat enthaltenen Ionen, insbesondere vom Alkalityp Na⁺ oder K⁺, wobei sich die Sperrschicht in dem Stapel zwischen der Oberfläche des Substrats und mindestens einer oberen Schicht befindet, die der Verglasung eine Funktion vom Typ Sonnenschutz, Niedrigemission, Antireflex, photokatalytisch, hydrophob oder sonstiger Art verleiht, wobei die Sperrschicht im Wesentlichen von einem Siliziumoxinitrid gebildet ist, wobei die Verglasung **dadurch gekennzeichnet ist, dass** das Siliziumoxinitrid ferner ein oder mehrere Elemente umfasst, die aus der Gruppe bestehend aus Al, Ga oder B ausgewählt sind und dass das Atomverhältnis Si/X strikt kleiner als 92/8 in der Sperrschicht ist, wobei X die Summe der Atombeiträge der Elemente Al, Ga und B ist.

2. Verglasung nach Anspruch 1, wobei das Atomverhältnis Si/X kleiner als 92/8 und größer als 80/20 ist.

3. Verglasung nach einem der Ansprüche 1 oder 2, wobei das Atomverhältnis Si/X kleiner als 90/10, vorzugsweise kleiner als 88/12, ist.

4. Verglasung nach einem der vorangehenden Ansprüche, wobei das Element X das Aluminium ist.

5. Verglasung nach einem der Ansprüche 1 bis 3, wobei das Element X das Gallium ist.

6. Verglasung nach einem der Ansprüche 1 bis 3, wobei das Element X das Bor ist.

7. Verglasung nach einem der Ansprüche 1 bis 3, umfassend mindestens zwei Elemente, die aus dem Bor, dem Gallium und dem Aluminium ausgewählt sind.

8. Verglasung nach vorangehendem Anspruch, wobei die Sperrschicht ein Siliziumoxinitrid ist, wobei das Atomverhältnis N/O größer als 10/90, vorzugsweise größer als 20/80, ist.

9. Verglasung nach einem der vorangehenden Ansprüche, umfassend ferner eine Deckschicht, die über der funktionellen Schicht angeordnet ist, gebildet im Wesentlichen aus einem Siliziumoxid oder einem Siliziumoxinitrid, umfassend ein oder mehrere Elemente, die aus der Gruppe bestehend aus Al, Ga oder B ausgewählt sind und deren Atomverhältnis Si/X strikt kleiner als 92/8 ist.

10. Verglasung nach Anspruch 9, wobei das Atomverhältnis Si/X kleiner als 90/10, vorzugsweise kleiner als 88/12, ist.

11. Verglasung nach einem der Ansprüche 9 oder 10, wobei die Deckschicht ein Siliziumoxid ist.

12. Verglasung nach einem der Ansprüche 9 oder 10, wobei die Deckschicht ein Siliziumoxinitrid ist.

## Claims

1. A glazing incorporating a glass substrate comprising, on at least one portion of its surface, a stack of layers including a barrier layer to the migration of ions contained in said substrate, especially of Na⁺ or K⁺ alkali metal type, said barrier layer being interposed in said stack between the surface of said substrate and at least one upper layer giving said glazing a functionality of the solar-control, low-emissivity, antireflection, photocatalytic, hydrophobic or other type, said barrier layer essentially consisting of a silicon oxynitride, said glazing being **characterized in that** said silicon oxynitride also comprises one or more elements selected from the group consisting of Al, Ga or B and **in that** the Si/X atomic ratio is strictly less than 92/8 in said barrier layer, X being the sum of the atomic contributions of said Al, Ga and B elements.

2. The glazing as claimed in claim 1, wherein the Si/X atomic ratio is less than 92/8 and greater than 80/20.

3. The glazing as claimed in either of claims 1 and 2, wherein the Si/X atomic ratio is less than 90/10, preferably less than 88/12.

4. The glazing as claimed in one of the preceding claims, wherein the element X is aluminum.

5. The glazing as claimed in one of claims 1 to 3, wherein the element X is gallium.

6. The glazing as claimed in one of claims 1 to 3, wherein the element X is boron.

7. The glazing as claimed in one of claims 1 to 3, comprising at least two elements selected from boron, gallium and aluminum.

8. The glazing as claimed in the preceding claim, wherein the barrier layer is a silicon oxynitride wherein the N/O atomic ratio is greater than 10/90, preferably greater than 20/80.

9. The glazing as claimed in one of the preceding claims, additionally comprising an overlayer placed on top of said functional layer, essentially consisting of a silicon oxide or a silicon oxynitride, comprising one or more elements selected from the group consisting of Al, Ga or B and of which the Si/X atomic ratio is strictly less than 92/8.

10. The glazing as claimed in claim 9, wherein the Si/X atomic ratio is less than 90/10, preferably less than 88/12.

11. The glazing as claimed in either of claims 9 and 10, wherein the overlayer is a silicon oxide.

12. The glazing as claimed in either of claims 9 and 10, wherein the overlayer is a silicon oxynitride.
